# EUROPÄISCHE PATENTSCHRIFT

(11) **EP 0 382 110 B1**
(45) Veröffentlichungstag und Bekanntmachung des Hinweises auf die Patenterteilung: **13.04.1994**
(21) Anmeldenummer: 90102050.3
(22) Anmeldetag: 02.02.1990
(51) Int. Cl.: B23K 9/10, H02M 3/28

(54) **Ausgangssteuerkreis für Inverter sowie Hochfrequenz-Stromquelle zur Gleichstromversorgung einer Schweissstation**
Output control circuit for reversers, and high-frequency power supply for the DC supply of a welding station
Circuit de commande de sortie pour inverseur, ainsi que source de courant haute fréquence pour l'alimentation en courant continue d'une station de sondage

(30) Priorität: 06.02.1989 US 306470
(43) Veröffentlichungstag der Anmeldung: 16.08.1990
(73) Patentinhaber: THE LINCOLN ELECTRIC COMPANY, Cleveland, Ohio 44117-1199 (US)
(72) Erfinder: Bilczo, Dale L., Rocky River Ohio 44116 (US); Church, Larry L., Jefferson Ohio 44047 (US); Kurchak, Michael J., Eastlake Ohio 44094 (US)
(74) Vertreter: Vollbach, Hans, Dipl.-Ing.

(56) Entgegenhaltungen:
- EP-A- 0 072 683

## Beschreibung

Die Erfindung bezieht sich auf Hochfrequenzinverter derjenigen Ausführung, wie sie als Stromquellen für das Lichtbogenschweißen verwendet werden, wobei die Erfindung insbesondere auf den Ausgangskreis eines solchen Inverters gerichtet ist.

In ihrer bevorzugten Anwendung ist die Erfindung auf einen Hochfrequenzinverter für das Gleichstromschweißen gerichtet, bei dem eine gleichgerichtete Gleichstrom-Stromquelle in wechselnder Folge geschaltet wird, um den Kern eines Umsetzers bzw. eines Ausgangs-Transformators in wechselnder Folge zu magnetisieren und in entgegengesetzter Flußrichtung zu remagnetisieren. Der Schaltvorgang wird mit Hilfe zweier gesonderter und wechselweise betätigter Schaltvorrichtungen, wie insbesondere Feldsteuerungstransistoren u.dgl., bewirkt, wobei die eine Schaltvorrichtung zur Magnetisierung und die andere Schaltvorrichtung zur Remagnetisierung des Transformatorkerns des Ausgangstransformators aktiviert wird. Durch wechselweise Betätigung der beiden Schaltvorrichtungen ist somit der Hochfrequenz-Wechselstrom mit den auf demselben Kern angeordneten Sekundärwicklungen magnetisch gekoppelt. Der Hochfrequenz-Sekundärstrom wird über eine Gleichrichtervorrichtung, wie z.B. über schnellarbeitende Dioden, und über eine elektrische Strom-Filter- bzw. -Siebvorrichtung, wie einen Induktor, den Ausgangsklemmen der Gleichstrom-Schweißeinrichtung zugeführt.

Die Sekundärseite des Ausgangs-Umsetzers eines Inverters derjenigen Art, auf den die Erfindung bevorzugt gerichtet ist, weist zwei Wicklungsabschnitte mit gesonderter Strom-Gleichrichtung auf. Wenn der Kern des Umsetzers bzw. des Transformators in der einen Richtung magnetisiert und anschließend in der Gegenrichtung remagnetisiert wird, so werden die sekundärseitigen Wicklungsabschnitte alternierend in Durchlaßrichtung der Dioden, mit denen sie jeweils gesondert verbunden sind, polarisiert. Die elektrischen Hochfrequenz-Stromimpulse der jeweils zutreffenden Polarität werden dabei dem Induktor der Schweißeinrichtung und über diesen den Ausgangsklemmen der Schweißeinrichtung und damit der angeschlossenen Schweißstation zugeführt.

Die beiden Schaltvorrichtungen des Inverters werden durch elektrische Triggerimpulse bzw. durch Steuerimpulse mit einer vorgegebenen Impulsdauer (Impulslänge) und einer vorgegebenen Frequenz bzw. Wiederholungsgeschwindigkeit gesteuert. Um die Größe des Ausgangsstroms oder der Schweißspannung zu steuern, kann die Länge der Triggersignale bzw. der Steuerimpulse verstellt werden. Bei steigendem Strom- oder Spannungsbedarf für den Schweißbetrieb wird die Länge der zur wechselweisen Betätigung der Inverter-Schaltvorrichtungen dienenden Triggerimpulse entsprechend dem jeweils erwünschten Bedarfswert am Ausgang der Schweißstromquelle erhöht.

Diese mit Rückkopplung arbeitende Steuerung der Inverterstufe erfolgt im allgemeinen mit Hilfe eines spannungsgesteuerten Impulslängen-Modulationskreises, der mit einer ausgewählten Frequenz, wie z.B. 20 KHz, arbeitet. Diese Modulatoren werden gewöhnlich bei elektrisch schaltbaren Inverter-Stromquellen der hier in Betracht kommenden Art verwendet und stehen in Form integrierter Standard-Schaltkreis-Baugruppen zur Verfügung. Die ausgewählte Betriebsfrequenz beeinflußt die Reaktionszeit der Schweißeinrichtung in bezug auf die Rückkopplungs- bzw. die abgetasteten Spannungssignale und beeinflußt damit auch die Ansprechempfindlichkeit der Schweißeinrichtung auf kleine Lichtbogenschwankungen. Für den einwandfreien Betrieb erforderlich ist eine hohe Frequenz (oberhalb etwa 10 KHz). Die Betriebsfrequenz beeinflußt auch das Arbeitsgeräusch des Lichtbogens und des Schweißkreises. Um die Geräuschentwicklung möglichst klein zu halten und damit die sich aus dem Arbeitsgeräusch ergebenden Belästigungen geringzuhalten, sollte mit einer Frequenz oberhalb etwa 20 kHz gearbeitet werden. Frequenzen oberhalb dieser Grenzen genügen den vorgenannten Zwangsbedingungen, haben aber die unerwünschte Wirkung größerer Leistungsverluste in den Schalt- und Gleichrichterelementen, so daß sich die Anforderungen an den Torsteuerungs-Triggerschaltkreis erhöhen.

Stromquellen der Hochfrequenz-Inverterbauweise der oben beschriebenen Art sind im wesentlichen bekannt und werden als Lichtbogen-Schweißstromquellen eingesetzt, die sich durch verhältnismäßig kleine und leichte Bauweise auszeichnen und wegen ihrer rascheren Rückkopplungs- bzw. Regelzeiten Vorteile bieten. Diese Inverter können für eine Vielzahl von Gleichstrom-Schweißprozessen verwendet werden. Die von der Bauart her gegebene Begrenzung bezüglich der Minimierung des Inverter-Primärstroms und auch des Schalt- bzw. Steuerstroms, um in bezug auf die Abmessung und das Gewicht Vorteile gegenüber den herkömmlichen Lichtbogenschweißstromquellen zu erzielen und die Kosten für die Schaltvorrichtung möglichst niedrig zu halten, erfordert aber den Einsatz eines Inverter-Umformers mit größtmöglichem Verhältnis der Primärwindungen zu den Sekundärwindungen. Dieses Verhältnis ergibt sich aus der für den Schweißprozeß geforderten Spannung bei maximalem Ausgangsstrom der Inverter-Schweißeinrichtung. Die maximale Ausgangsspannung der Inverter ist selbst bei wesentlich vermindertem Ausgangsstrom aber in seinem Spannungswert zu klein, um beim bekannten SMAW-Schweißprozeß (Schweißen mit Stabelektrode) das ausreichende Lichtbogen-Ionisationspotential zu erreichen, wenn lange Lichtbogenstrecken zu halten sind. Außerdem ist die Spannungs-Strom-Kennlinie am Ausgang der Schweißeinrichtung eine verhältnismäßig flache Kurve, bei der nur eine Änderung um einige wenige Volt eine Stromänderung von je 100 A gegeben ist. Damit läßt sich nicht ein Übergangs-Betriebspunkt, beispielsweise von 50 V bei 50 A, erreichen, wie er beim Lichtbogenschweißen mit Stabelektrode erwünscht ist. Bei Verwendung der vorgenannten Hochfrequenz-Inverter-Stromquellen muß daher mit verhältnismäßig teuren Stabelektroden gearbeitet werden, um den Lichtbogen zu stabilisieren.

Dem vorgenannten Nachteil kann dadurch begegnet werden, daß ein Energiespeicherglied, wie z.B. ein Induktor, mit dem Ausgangskreis der Schweißeinrichtung verbunden wird, welches genügend Energie bei einem ausreichend hohen Potential zu speichern und zu liefern geeignet ist, um einerseits das für den einwandfreien Schweißbetrieb erforderliche Lichtbogen-Ionisierungspotential und andererseits den erforderlichen Spannungs-Strom-Betriebspunkt zur Verfügung zu stellen. Ein Induktor hat an sich diese Eigenschaften. Allerdings werden hiermit das Gewicht und die Bauabmessungen der Schweißeinrichtung nicht unerheblich erhöht. Eine Verbesserung in bezug auf die Stabilität des Schweißbetriebs beim Schweißen mit Stabelektroden läßt sich durch Verwendung einer Elektrode erreichen, die eine Stabilisierungsbeschichtung in erheblicher Menge aufweist. Diese Beschichtung ist teuer und bedeutet außerdem eine nicht unerhebliche Einschränkung in der Verwendung der vergleichsweise kleinen, für den gesamten Bereich der Gleichstrom-Schweißoperationen ausgelegten Hochfrequenz-Inverter-Stromquelle.

Demzufolge ist eine Hochfrequenz-Inverter-Schweißeinrichtung, die in ihrer Bauart auf möglichst kleine Abmessungen und möglichst kleines Gewicht ausgelegt ist, in ihrer Betriebsweise aufgrund der verhältnismäßig niedrigen maximalen Ausgangsspannungscharakteristik und ihrer niedrigen Gesamtspannung in bezug auf den Strom in ihrem Einsatz begrenzt. Durch Erhöhen der Windungszahl in den Sekundärwicklungen, durch Erhöhen der Leistung eines Ausgangsinduktors oder durch Verwendung von Stabelektroden mit einer hochstabilisierenden Elektrodenbeschichtung lassen sich aus den angegebenen Gründen die vorgenannten Schwierigkeiten nicht in der gewünschten Weise beheben.

Aufgabe der Erfindung ist es vor allem, die vorgenannten Nachteile zu beseitigen. Dabei soll bei einem Hochfrequenz-Inverter zum Antrieb eines Ausgangs- oder Lasttransformators eine erhöhte maximale Ausgangsspannung und eine hohe Spannung bei dem gewünschten Betriebsstrom erreicht werden, dies bei möglichst kleinem Stromanstieg auf der Primärseite des Transformators.

Diese Aufgabe wird erfindungsgemäß mit den in den einzelnen Ansprüchen angegebenen Merkmalen gelöst, wobei die Unteransprüche vorteilhafte Ausgestaltungsformen der Erfindung zum Inhalt haben. Nach der Erfindung sind demgemäß an den beiden gegenüberliegenden Enden der Sekundärwicklung des Transformators bzw. Umformers zusätzliche Windungen bzw. Wicklungen vorgesehen. Diese Hilfs- oder Zusatzwicklungen zu beiden Seiten der Sekundärwicklung bilden eine weitere Spannungs- und Stromquelle mit Gleichrichtung des Stroms durch eine Strom-Einwegvorrichtung, die in Reihe mit jeder Hilfswicklung geschaltet ist. Ein Strombegrenzungsglied, wie z.B. ein Induktor, begrenzt den Stromfluß in jeder Hilfswicklung und begrenzt demgemäß die Strommenge, die zu dem Primär-Stromimpuls hinzuaddiert wird, wobei sie zugleich noch die gewünschte Spannungs-Strom-Charakteristik am Ausgang der Schweißeinrichtung bewirkt. Der Inverter hat somit eine maximale Schweißspannung, die erheblich größer ist als diejenige, die ohne diese Hilfswicklungen gegeben ist. Diese erhöhte maximale Ausgangsspannung in Verbindung mit dem Anstieg in der Spannungscharakteristik ist wünschenswert. Diese durch die Hilfswicklungen erzielten Betriebsparameter erlauben ein einwandfreies Elektrodenschweißen, selbst dann, wenn die Stabelektrode nur eine geringe oder keine Stabilisierungsbeschichtung aufweist. Mit der Erfindung wird somit eine Hochfrequenz-Inverter-Stromquelle mit hoher maximaler Ausgangspannung und hoher Spannungscharakteristik ohne reflektierten hohen Stromfluß auf der Primärseite des Ausgangstransformators bzw. des Umformers der Stromquelle geschaffen. Dabei stellt sich auf der von den Schaltvorrichtungen betriebenen Primärseite des Umformers nur ein minimaler Anstieg im mittleren Quadrat-Grundwert des durch die Schaltvorrichtungen zu schaltenden Stromes ein.

Nach einem vorteilhaften Ausgestaltungsmerkmal der Erfindung sind die Hilfswicklungen auf der Sekundärseite des Umsetzers jeweils mit einer Induktivität in Reihe mit einer Gleichrichterdiode verbunden. Auf diese Weise wird die Strommenge, die die Hilfswicklungen durchfließen kann, kontrolliert. Die zusätzliche Wicklung erhöht das Spannungsniveau bei unterschiedlichem Ausgangs-Stromniveau. Hierdurch wird die Charakteristik der Stromquelle nach oben in Richtung auf eine erhöhte Spannung mit nur einer kleinen Verschiebung auf der Eingangsseite des Umformers verschoben. Der Effektivstrom in der Eingangsstufe wird nicht soweit erhöht, daß sich eine unzuträgliche Erwärmung der Schaltvorrichtungen einstellt.

In bevorzugter Ausführung der Erfindung bestehen die Strombegrenzungsglieder der Hilfswicklungen auf der Sekundärseite der Stromquelle aus Induktoren. Aufgrund der ausgewählten Betriebsfrequenz können diese Induktoren verhältnismäßig klein gehalten werden. Vorzugsweise weisen die Induktoren eine solche Induktivität auf, daß an den Ausgangsklemmen der Schweißder Schweißeinrichtung ein Strom von 50 A bei einem Spannungswert von 50 V erhalten wird. Bei Verwendung der Induktanz stellt sich bei hohen Stromwerten ein natürlicher Stromabfall am Ausgang ein, der die Steuerung über den in die Primärseite induzierten Stromfluß begünstigt.

Nach einem weiteren Merkmal der Erfindung kann die Gleichrichterdiode in den Stromkreisen bzw. in den Nebenkreisen der beiden Hilfswicklungen auch durch einen silizium-gesteuerten Gleichrichter (SCR) ersetzt werden. Wenn eine Primärwicklung in einer der Hilfswicklungen einen Stromimpuls der entsprechenden Polarität induziert, kann der Siliziumgleichrichter dieser Hilfswicklung getriggert oder gesteuert werden. Bei Verwendung der Siliziumgleichrichter (SCR) als ansteuerbare Gleichrichtervorrichtungen lassen sich die Hilfswicklungen, wie gefordert, aktivieren oder deaktivieren. In diesem Zusammenhang kann die Anordnung mit Vorteil so getroffen werden, daß der Durchschnittsstrom am Ausgang der Schweißeinrichtung abgetastet wird. Wenn der Durchschnittsstrom oberhalb eines vorbestimmten Niveaus liegt, so werden die Siliziumgleichrichter beider Hilfswicklungen passiv gemacht bzw. gesperrt oder abgeschaltet. Der Inverter arbeitet dann so, als ob die Hilfswicklungen nicht vorhanden wären, es sei denn, daß ein niedriger Betriebsstrom des Inverters gefordert wird. Die Siliziumgleichrichter sind im übrigen betriebsfähig und im Gleichklang mit den Eingangsimpulsen zu den Primärwicklungen leitend.

Mit der Erfindung läßt sich der Schweißbetrieb in zufriedenstellender Weise mit unstabilisierten Stabelektroden, wie insbesondere denjenigen der EXX10-Elektrodenklassifikation durchführen. Diese allgemeine Elektrodenklasse weist eine niedrige Stabilisierung auf und konnte bisher nicht in Verbindung mit einem Hochfrequenz-Inverter derjenigen Ausführung verwendet werden, auf den die Erfindung gerichtet ist. Es versteht sich aber, daß mit der Erfindung die Arbeitsweise auch bei anderen Elektrodenklassen verbessert wird, deren Stabelektroden teilweise mit einer stabilisierenden Beschichtung versehen sind, wie z.B. den Elektrodenklassen EXX 11 und EXX13. Die Erfindung ermöglicht demgemäß die Verwendung niedrig-stabilisierter Stabelektroden für das Elektrodenschweißen. Durch Anheben der Spannungscharakteristik des Inverterausgangs verbessert sie auch die Arbeitsweise bei einigen stabilisierten Schweißelektroden.

Bei einer bevorzugten Ausgestaltungsform der Erfindung weist jede Hilfswicklung sechs Windungen auf und ist mit einem in Reihe liegenden induktiven Widerstand versehen. Diese Anordnung verstärkt die Spannung an den Niederstrom-Ausgängen, ohne daß die volle Ausgangsspannung der Hilfswicklungen bei hohem Stromniveau zur Anwendung kommt, da der induktive Widerstand einen vorbestimmten hohen Spannungsabfall durch Blindwiderstand aufweist. Der erhöhte Stromfluß in den Primärwicklungen der Stromquelle, bedingt durch den Strom in den Hilfswicklungen, tritt daher bei größeren Ausgangsströmen selbst innerhalb des Ausgangs-Strombereichs, bei dem die Siliziumgleichrichter stromleitend sind, weniger in Erscheinung.

Mit der Erfindung wird demgemäß eine wesentliche Verbesserung eines Hochfrequenz-Inverters zur Gleichstromversorgung einer Schweißstation erzielt, die ein Elektrodenelement und ein Werkstückelement umfaßt. Dieser Inverter umfaßt einen Transformator bzw. einen Umformer mit einem Kern, mit Primärwicklungen und zwei Sekundärwicklungen, die in einem Knotenpunkt in Reihe zueinander geschaltet sind und deren beide anderen Wicklungsenden Ausgänge bzw. Ausgangsklemmen bilden. Dabei sind die beiden Wicklungsabschnitte der Sekundärwicklungen über eine Gleichrichteranordnung an den Ausgang angeschlossen, so daß bei wechselweiser Magnetisierung und Remagnetisierung des Transformatorkerns ein Stromfluß durch jede der beiden Sekundärwicklungen bewirkt wird. Die Gleichstrom-Impulse werden, gefiltert durch eine Drossel herkömmlicher Art, der Schweißstation zugeführt, wenn die Primärwicklungen des Umformers in den entsprechenden Richtungen vom Strom durchflossen werden. Bei dieser Anordnung ist erfindungsgemäß eine erste, in Reihe mit der einen Sekundärwicklung verbundene Zusatz-Stromverstärkungswicklung (Hilfswicklung) mit einem sie mit dem einen der beiden genannten Schweißstation-Elemente verbindenden Stromschaltkreiselement bzw. Stromsteuerkreiselement vorgesehen, das eine Strom-Einwegevorrichtung aufweist, die gleichgerichtet zu der Strom-Einwegevorrichtung gepolt ist, welche zur Gleichrichtung dieser ersten Sekundärwicklung verwendet wird. Der in der ersten Sekundärwicklung induzierte Stromfluß wird somit dem Stromfluß in der ersten Hilfswicklung hinzuaddiert. Da die Wicklungen so geschaltet sind, daß sich die Spannungsaddition ergibt, wird die Ausgangsspannung erhöht. Der Stromschaltkreis der genannten Hilfswicklung weist ferner ein Strombegrenzungselement auf, so daß sich eine Begrenzung des hinzuaddierten Stromes ergibt. Der durch die erhöhte induzierte Spannung erhöhte Strom wird auf diese Weise als begrenzter Stromfluß im Schaltkreis der Hilfswicklung wirksam. Zugleich ist eine zweite Hilfswicklung zur Spannungsverstärkung in Reihe mit der zweiten Sekundärwicklung in gleicher Weise wie die erstgenannte Hilfswicklung vorgesehen. Die beiden Hilfswicklungen mit den strombegrenzenden Vorrichtungen bilden Zusatzwindungen im Sekundärteil des Umformers. Auf diese Weise wird eine höhere Spannung mit zu den Stromimpulsen der beiden Sekundärwicklungen hinzuaddierten Stromimpulsen induziert, wobei die addierten Impulse der Drossel zugeführt werden. Bei dem bevorzugten Ausführungsbeispiel der Erfindung wird die maximale Ausgangsspannung von etwa 43 V auf etwa 120 V mit sechs zusätzlichen Windungen in jeder Hilfswicklung erhöht. Der Strombegrenzer gestattet einen Stromfluß von 50 A bei einer Spannung von 50 V im Betrieb mit 20 KHz.

Nach Vorstehendem ist also die erfindungsgemäße Hochfrequenz-Stromquelle so ausgeführt, daß den beiden Wicklungsabschnitten der Sekundärwicklung des Umformers jeweils eine in Reihe mit ihnen in einem Schalt- bzw. Steuerkreis (Nebenkreis) liegende Hilfsstrom-Zusatzwicklung zugeordnet ist, wobei in den genannten Kreisen angeordnete Strom-Einwegevorrichtungen jeweils mit der zugeordneten Strom-Einwegevorrichtung gleichgepolt sind, und wobei in den genannten Kreisen in Reihe eine Strombegrenzungsvorrichtung vorgesehen ist.

Mit der Erfindung wird somit ein Inverter-Ausgangssteuerkreis erhalten, der eine erhöhte maximale Ausgangsspannung und eine erhöhte Spannung in der Spannungs-Strom-Charakteristik ermöglicht, ohne erhöhten induzierten Stromfluß im Primärteil des Steuerkreises. Ein solcher Steuerkreis ermöglicht die Verwendung eines Inverters beim Schweißen (stick welding) mit einer Elektrode, die keine stabilisierende Umhüllung oder nur eine geringe Menge an stabilisierendem Umhüllungsmaterial aufweist. Der erfindungsgemäße Steuerkreis kann mit verhältnismäßig niedrigem Kostenaufwand als Ausgangskreis bei Hochfrequenz-Invertern der Standardausführung zur Anwendung kommen, ohne daß hierbei unbedingt die Notwendigkeit besteht, die beim Inverter verwendeten Schaltvorrichtungen auf größere Ströme auszulegen. Der Hochfrequenzbetrieb vollzieht sich im allgemeinen im Bereich von 3 - 35 KHz und vorzugsweise bei 20 KHz.

Die Erfindung wird nachfolgend im Zusammenhang mit dem in der Zeichnung gezeigten bevorzugten Ausführungsbeispiel näher erläutert. In der Zeichnung zeigen:
- Fig. 1: das bevorzugte Ausführungsbeispiel der Erfindung schematisch in einem Schaltbild;
- Fig. 2: die Spannungs-Strom-Charakteristik des in Fig. 1 gezeigten Hochfrequenz-Invertersystems in einem Diagramm ohne Verwendung der Erfindungsmerkmale;
- Fig. 3: ebenfalls in einem Diagramm schematisch die Spannungs-Strom-Kurve der bei dem Ausführungsbeispiel nach Fig. 1 zur Spannungserhöhung vorgesehenen Hilfswicklungen bei einem Betrieb bei 20 KHz;
- Fig. 4: in einem Diagramm die zusammengesetzte Spannungs-Strom-Charakteristik, die mit der Erfindung bei einem Hochfrequenz-Inverter erhalten wird, der die in Fig. 2 gezeigte Strom-Spannungs-Charakteristik aufweist;
- Fig. 5: in einem vergleichenden Stromdiagramm den Stromfluß in der Hauptstufe des Ausgangstransformators zur Darstellung der mit der Erfindung in bezug auf die Eingangsstrom-Charakteristik der Stromquelle nach Fig. 1 erzielten Vorteile;
- Fig. 6: die Erfindung in ihrem breitesten Aspekt in einem Schaltdiagramm;
- Fig. 7: weitere Aspekte der Erfindung in einem kombinierten Spannungs-Strom-Diagramm;
- Fig. 8: ein vereinfachter Schaltkreis, ähnlich demjenigen der Fig. 6, zur Darstellung der Verwendung von schaltbaren Strom-Einwegevorrichtungen in Verbindung mit den Hilfswicklungen;
- Fig. 9: in einem Diagramm eine typische Spannungs-Strom-Charakteristik, die mit der Erfindung erreichbar ist.

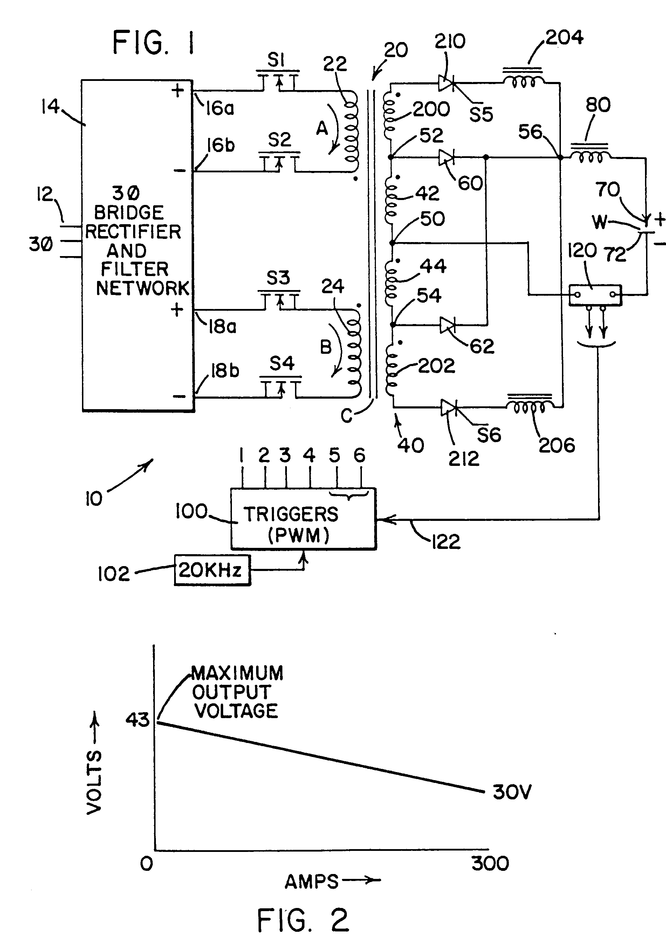

Fig. 1 zeigt einen Hochfrequenz-Inverter 10 in einer Ausführung mit einem Dreiphasen-Eingang 12 und einem Dreiphasen-Brückengleichrichter mit Siebschaltung 14 zur Erzeugung eines Gleichstrom-Ausgangs, dargestellt als zwei gesonderte Sätze von Ausgangsklemmen 16a, 16b und 18a, 18b. Es versteht sich, daß der Ausgang des Gleichrichters eine einzelne positive und negative Klemme bildet. Die beiden Sätze der Ausgangsklemmen repräsentieren den Leistungsausgang zu einem Ausgangs-Transformator bzw. Umformer 20 bzw. zu dessen beiden Primärwicklungen 22 und 24. Bei dem gezeigten Ausführungsbeispiel wird die eine Wicklung zur Magnetisierung des Transformatorkerns C und die andere Wicklung zur Remagnetisierung des Kerns C verwendet. Bei einigen Hochfrequenz-Invertern wird eine einzige, das Primärteil des Umformers 20 bildende Wicklung jeweils in entgegengesetzten Richtungen vom Strom durchflossen. Zwei Sätze von Schaltvorrichtungen S1, S2 und S3, S4 werden zur Magnetisierung und Remagnetisierung des Kerns C des Umformers 20 verwendet. Die Schaltvorrichtungen S1 - S4 sind dargestellt als Feldsteuerungstransistoren (FET). Die Betätigung der Schaltvorrichtungen S1 und S2 bewirkt einen Stromfluß in der ersten Primärwicklung 22 in Pfeilrichtung A. Entsprechend bewirkt die Betätigung bzw. das Schließen der Schalter oder Schaltvorrichtungen S3 und S4 einen Stromfluß durch die zweite Primärwicklung 24 in Pfeilrichtung B. Auf diese Weise wird der Kern C des Umformers 20 durch alternierende Betätigung der Schaltersätze in wechselnder Folge magnetisiert und remagnetisiert. Dies bewirkt in der Wicklung der Sekundärseite bzw. in der Ausgangsstufe des Inverters eine induzierte Spannung. Die Sekundärseite weist eine Sekundärwicklung 40 mit zwei gesonderten Wicklungsabschnitten 42 und 44 auf. Diese Wicklungsabschnitte können aus Einzelwicklungen oder aber aus den Abschnitten einer einzigen Sekundärwicklung bestehen, da sie in derselben Richtung polarisiert werden. Eine Anzapfstelle in der Mitte der Sekundärwicklung 40 bildet einen gemeinsamen Knotenpunkt 50. Die im Abstand zueinander liegenden Wicklungsenden 52 und 54 bilden bei den bisher gebräuchlichen Invertern den gemeinsamen Ausgang. Gleichrichterdioden 60 und 62 bewirken einen Gleichstrom-Ausgang zwischen dem gemeinsamen Knotenpunkt bzw. der Abgriffstelle 50 und einer gemeinsamen Ausgangsklemme 56, so daß sich ein Stromfluß über die Anschlüsse 52 und 54 einstellt. Der Gleichstrom fließt zwischen dem Knotenpunkt 50 und der Klemme 56 durch die Schweißstation W, die eine Standard-Stabelektrode 70 und ein Werkstück 72 umfaßt. Die Stromimpulse zwischen dem Abgriff- oder Knotenpunkt 50 und der Klemme 56 gelangen, gefiltert mittels einer Standard-Drossel 80, über die Schweißstation W.

Zur Synchronisation der Betätigung der beiden Schaltersätze S1 - S4 ist ein Standard-Trigger bzw. ein Steuergenerator oder eine Torschaltung 100 mit gesteuerter Pulslängenmodulation und Zeit- bzw. Taktgeber 102 vorgesehen, der mit einer Frequenz von 20 KHz arbeitet. Der Schaltkreis 100 weist die Ausgänge oder Tore 1 - 6 auf, wobei die Ausgänge 1 - 4 die Betätigungssignale für jeweils die Schaltvorrichtung S1 - S4 liefern. Bei der ersten Betriebsphase betätigt ein Torsignal bzw. ein Triggerimpuls an den Ausgängen 1 und 2 gleichzeitig die beiden Schalter S1 und S2, so daß sich in der Wicklung 22 der Stromfluß in Pfeilrichtung A einstellt. Anschließend verschwinden die Betätigungssignale an den Ausgängen 1 und 2 und es werden Schalt- bzw. Triggersignale an den Ausgängen 3 und 4 erzeugt, welche die Schalter S3 und S4 schalten, so daß sich ein Remagnetisierungsstrom in der Wicklung 24 in Pfeilrichtung B einstellt, wie dies in Fig. 1 gezeigt ist. Die Impulse an den Ausgängen 1 und 2 und anschließend an Ausgängen 3 und 4 werden mit einer Impulsrate von 20 KHz erzeugt. Die Breite bzw. Länge dieser Impulse ist veränderlich, um den Ausgangsstrom in der Schweißstation W zu steuern. Bei mit Konstantstrom arbeitendem Schweißbetrieb, wie z.B. dem SMAW-Betrieb (stick welding) erfolgt dies durch Abtasten des Stromflusses im Ausgangskreis mit Hilfe eines Detektors, z.B. eines Abzweigstromkreises 120. Der abgetastete Strom steuert den Kreis 100 durch Änderung der Impulslänge nach Maßgabe der an der Leitung 122 anstehenden Spannung. Bei Stromabfall ergibt sich ein Spannungsabfall an der Leitung 122 mit der Folge, daß die Impulslänge der sich an den Schaltern S1 - S4 einstellenden Triggerimpulse erhöht wird, wie dies bei den herkömmlichen Systemen mit Impulslängenmodulation der Fall ist.

Der Hochfrequenz-Inverter 10, soweit er vorstehend beschrieben ist, liefert im Betrieb die im Diagramm der Fig. 2 gezeigte Spannungs-Stromkurve. Die maximale Ausgangsspannung beträgt etwa 43 V, während die Neigung der Kurve über einen Bereich von 300 A einer Spannungsdifferenz von etwa 13 V entspricht. Diese charakteristische Kurve ermöglicht keinen Arbeitsbetriebspunkt mit 50 V und 50 A, wie er beim Stabelektrodenschweißen gewünscht wird. Hier wird eine erheblich über 43 V liegende maximale Ausgangsspannung gefordert, um im Falle einer größeren Lichtbogenstrecke den Schweißbetrieb zu stabilisieren. Aufgrund dieser Mängel bezüglich der genannten Parameter läßt sich der Inverter 10, soweit er vorstehend beschrieben ist, nur schwer für das Schweißen mit Schweißelektroden bzw. mit Schweißstäben verwenden. Dies läßt sich nur unter Verwendung teurer Elektroden bewerkstelligen, die mit einer stabilisierenden Beschichtung bzw. einer stabilisierenden Umhüllung versehen sind.

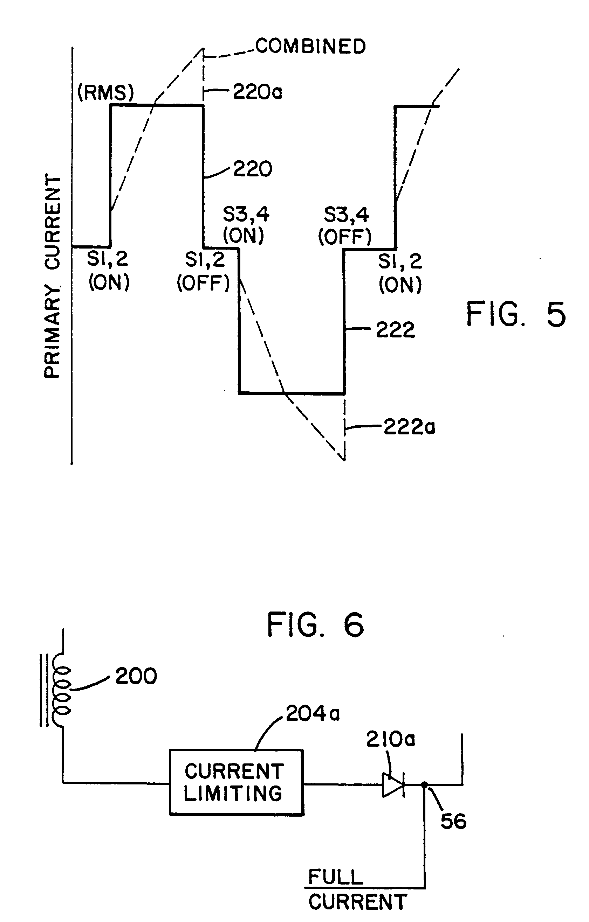

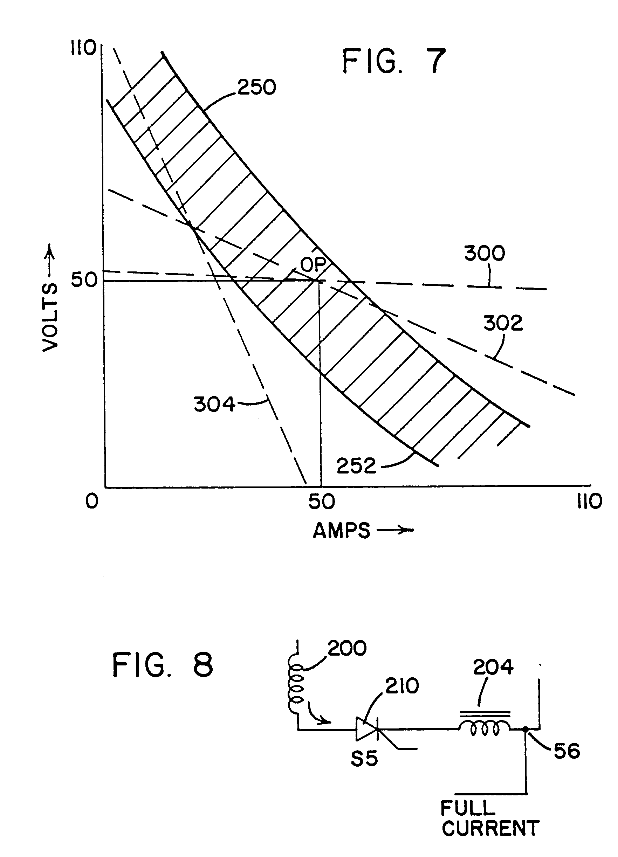

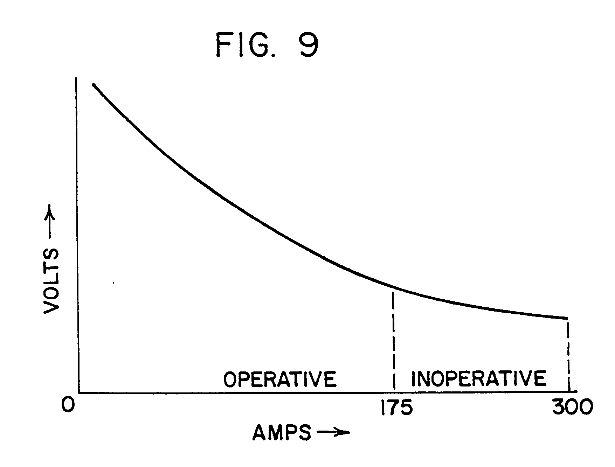

Nach der Erfindung wird der Hochfrequenz-Inverter 10 der Standardausführung unter Verwendung von eine Spannungsverstärkung bewirkenden Hilfswicklungen 200 und 202 auf der Sekundärseite des Transformators modifiziert. Diese Wicklungen sind in Reihe mit den Sekundärwicklungen bzw. deren Wicklungsabschnitten 42 und 44 geschaltet. Jede dieser Hilfs- oder Zusatzwicklungen weist soviele Windungen auf, daß die maximale Ausgangsspannung von 43 V auf etwa 110 V erhöht wird. Die Hilfs- bzw. Zusatzwicklungen 200 und 202 sind jeweils in einem Schalt- bzw. Steuerkreis (Nebenkreis) in Reihe mit einem der Strombegrenzung dienenden Induktor 204 bzw. 206 geschaltet, wobei anstelle dieses Induktors auch ein Widerstand zur Strombegrenzung verwendet werden könnte. Die Verwendung der Drosseln 204 und 206 ist aber den Widerständen vorzuziehen, da erstere weniger Wärme erzeugen. In den genannten Schalt- bzw. Nebenkreisen sind außerdem in Zuordnung zu den Dioden 60 und 62 Strom-Einwegevorrichtungen 210, 212 angeordnet, die die Ausgangsströme der Hilfswicklungen 200 und 202 gleichrichten. Die Einwegevorrichtungen 210 und 212 sind im gezeigten Ausführungsbeispiel als siliziumgesteuerte Gleichrichter, also als Siliziumgleichrichter (SCR) S5 und S6 dargestellt. Fig. 6 zeigt die Strombegrenzungsvorrichtung lediglich schematisch bei 204a, um die generelle Notwendigkeit zur Begrenzung dieses Stroms anzudeuten, wobei die Strom-Einwegevorrichtung hier lediglich aus einer Diode 210a besteht. Die Verwendung der gesteuerten Siliziumgleichrichter (SCR) bietet die Möglichkeit der wahlweisen Zuschaltung der Hilfswicklungen 200 und 202, wie dies weiter unten im Zusammenhang mit den Fig. 8 und 9 beschrieben wird.

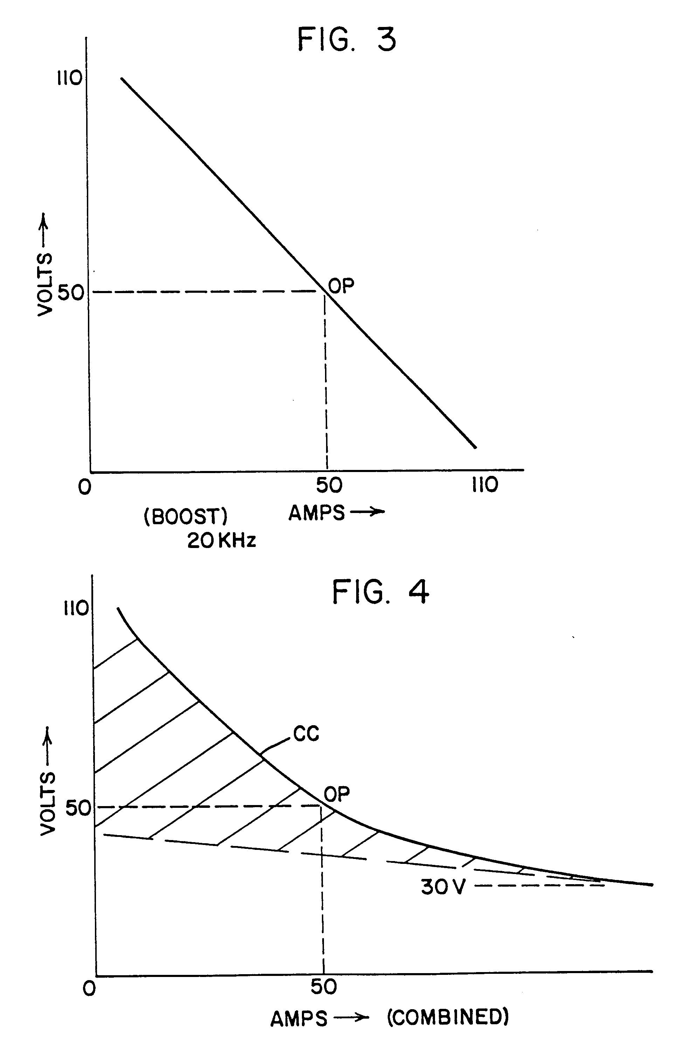

Mit der Verwendung der Hilfs-Sekundärwicklungen wird die Stromcharakteristik dieser Wicklungen der in Fig. 2 gezeigten charakteristischen Spannungs-Stromkurve überlagert. Zur Erläuterung dieses Vorgangs ist in Fig. 3 lediglich schematisch eine allgemeine Spannungs-Strom-Kurve für die beiden Zusatz-Sekundärwicklungen gezeigt. Die Induktoren 204 und 206 sind so ausgelegt, daß sich auf der in Fig. 3 gezeigten Kurve der Hilfswicklungen ein vorbestimmter Betriebspunkt OP ergibt. In der Praxis entspricht diesem Betirebspunkt OP eine Spannung von 50 v und eine Stromstärke von 50 A. Die Drosseln 204 und 206 sind auf eine Betriebsfrequenz von 20 KHz am Taktgebereinlaß zum Impulslängenmodulator oder Triggerkreis 100 (Fig. 1) abgestimmt. Bei Verwendung der beiden Hilfswicklungen 200 und 202 ergibt sich die in dem Diagramm der Fig. 4 gezeigte kombinierte Charakteristik für den Hochfrequenz-Inverter. Diese Kurve setzt sich zusammen aus der zu der Standard-Charakteristik der Fig. 2 hinzuaddierten Stromcharakteristik für die Hilfswicklungen, wie sie in Fig. 3 gezeigt ist. Die kombinierte Kurve stellt nicht eine einfache Addition dar, sondern ergibt sich aus dem Verhältnis der Windungszahl in den Wicklungen und aus weiteren elektrischen Größen. Fig. 4 zeigt das Grundkonzept der Erfindung, wonach die addierte Spannung der Hilfswicklung und der begrenzte Stromfluß in den parallelen Stromsteuerkreisen mit der Spannung und einem im wesentlichen unbegrenzten Stromfluß in der Normalwicklung kombiniert sind, so daß sich die Kurvencharakteristik CC ergibt. Damit wird eine maximale Ausgangsspannung über 110 V und ein Gleichstrom-Schweißbetrieb bei einem Betriebspunkt von 50 V und 50 A realisiert. Die Kurve CC hat eine erhöhte Spannung ohne entsprechend proportionalen Anstieg im Stromwert. Der schraffierte Teil des Diagramms nach Fig. 4 gibt denjenigen Bereich wieder, der aus dem hinzuaddierten Anteil der Sekundärwicklungen bzw. der Hilfswicklungen 200 und 202 gemäß Fig. 1 resultiert.

In Fig. 5 ist der Stromfluß in der Primärstufe des Inverters 10 schematisch in Form von Stromimpulsen 220 und 222 wiedergegeben. Der Impuls 220 ist der Stromfluß bei Einschaltung der Schalter S1 und S2, während der Impuls 222 dem Stromimpuls bei eingeschalteten Schaltern S3 und S4 entspricht. Die Impulse 220 und 222 sind mit zueinander entgegengesetzten Polaritäten gezeigt, um den Stromfluß für den Fall nur einer einzigen Primärwicklung zu veranschaulichen. Wenn zur Erhöhung der maximalen Ausgangsspannung den Wicklungsabschnitten 42 und 44 zusätzliche Wicklungen hinzugefügt werden, ergibt sich ein Anstieg in der Größe der Impulse 220 und 222. Dies würde einem proportionalen Anstieg des Effektivstroms in der Eingangsstufe des Inverters 10 entsprechen und würde eine aufwendigere Wärmeverlust-Anordnung bzw. aufwendigere Schaltvorrichtungen erfordern. Werden anstelle der in Fig. 1 gezeigten Siliziumgleichrichter S5 und S6 zur Gleichrichtung einfache Dioden verwendet, so ergibt sich mit der erfindungsgemäßen Anordnung ein Stromfluß in der Primärstufe entsprechend den in Fig. 5 gestrichelt angedeuteten Stromimpulsen 220a und 222a. Zu Beginn eines jeden Impulses ist der induzierte Stromfluß aufgrund des größeren Effekts der Strombegrenzungsfunktion etwas vermindert. Bei weiterem Anstieg des Ausgangsstroms ist dagegen bei dem einzelnen Stromimpuls die Strombegrenzungsfunktion weniger vorherrschend, so daß ein höherer Primärstrom möglich ist. Demgemäß ergeben sich bei Verwendung der Hilfswicklungen 200 und 202 am Impulsende höhere Ströme. Der Erwärmungseffekt wird hierbei aber nicht in dem Maße erhöht, wie es der Fall sein würde, wenn die Zahl der Windungen der Sekundärwicklungen 42 und 44 soweit erhöht würde, um denselben Anstieg in der maximalen Ausgangsspannung zu erhalten. Folglich wird mit der Erfindung ein geringerer Anstieg der Wärmeentwicklung in der Primärstufe des Inverters 10 erreicht.

Bei dem bevorzugten Ausführungsbeispiel der Erfindung werden Siliziumgleichrichter (SCR) als gesteuerte Gleichrichterelemente S5 und S6 verwendet, deren Primärstrom-Wellenform sich aus den Kurven 220a und 222a der Fig. 5 darstellen läßt, und zwar mit einem Ausgangsstromniveau unterhalb einer vorbestimmten Schwelle, wie z.B. 175 A, und zugleich als Stromimpulse 220 und 222 oberhalb dieser Schwelle. Bei oder im Bereich dieses Schwellen-Stromniveaus werden die Gleichrichter S5 und S6 abgeschaltet oder eingeschaltet, so daß die Hilfswicklungen sich unterhalb dieses Niveaus zu den Sekundärwicklungen hinzuaddieren und oberhalb dieses Niveaus unwirksam sind. Bei einem maximalen Ausgangsstrom sind die Primärströme demnach so gering, wie dies bei einem Inverter mit entsprechend geringer Anzahl an Sekundärwindungen der Fall sein würde.

In Fig. 6 ist das Verhältnis des vollen Stromanteils des Ausgangsstroms und des begrenzten Stromanteils als Parallelkreis wiedergegeben. Die Spannung ergibt sich aus der Gesamtzahl der Windungen, d.h. aus der Summe der normalen Sekundärwicklungen und der Hilfswicklungen, während der Strom eine Summierung des vollen Stroms der Normalwicklungen und des begrenzten Stroms der Hilfswicklung darstellt.

Die Erfindung läßt sich gemäß Fig. 7 so verwirklichen, daß sich eine Kurvencharakteristik mit maximaler Ausgangsspannung und einem Betriebspunkt OP in dem durch die Kurven 250 und 252 definierten schraffierten Bereich ergibt. Dies schließt die z.B. durch die Linien 300, 302 und 304 angegebenen Kurven aus. Die Kurvencharakteristik 300 würde einen stationären Betrieb im Betriebspunkt OP erlauben. Allerdings würde hierbei die maximale Ausgangsspannung nur geringfügig oberhalb 50 V liegen. Dies reicht zur Stabilisierung des Schweißlichtbogens nicht aus. Auch die Arbeitskurve 302 würde einen Konstantbetrieb im Betriebspunkt OP zulassen. Auch hier würde aber die maximale Ausgangsspannung nicht innerhalb des in Fig. 7 schematisch angedeuteten schraffierten Bereichs liegen. Die Kurve 304 ermöglicht keine maximale Ausgangsspannung, die bei einer Schweißeinrichtung mit Stabelektrode den Lichtbogen ausreichend stabilisieren würde. Diese Kurve ermöglicht keinen stationären Betrieb im Betriebspunkt OP. Fig. 7 zeigt, daß es eine Gruppe von Betriebskurven gibt, bei denen sich die maximale Ausgangsspannung und der Betriebspunkt erreichen lassen. Durch Auswahl des Begrenzungsinduktors und der Anzahl der Windungen in den Hilfswicklungen können diese beiden Parameter realisiert werden.

In den Fig. 8 und 9 ist ein weiterer Aspekt der Erfindung wiedergegeben. Um die Belastung im Primärkreis bzw. in den Primärwicklungen des Inverters 10 zu vermindern, sind die Strom-Einwegevorrichtungen 210 und 212 als schaltbare Vorrichtungen, wie insbesondere als steuerbare Siliziumgleichrichter S5 und S6 ausgeführt. Diese Vorrichtungen S5 und S6 werden von dem Torsteuerkreis 100, und zwar über dessen Ausgänge 5 und 6 (Fig. 1) im Sinne einer Schaltung derselben auf niedrigere Durchschnitts-Ausgangsströme betätigt. Um die Belastung in den Primärkreisen herabzusetzen, werden die schaltbaren Siliziumgleichrichter S5 und S6 passiv gemacht, wenn im Schweißbetrieb ein durchschnittlicher Ausgangsstrom oberhalb des vorbestimmten Niveaus vorliegt, das in Fig. 9 bei 175A liegt. Das Stromniveau wird von dem Detektor bzw. dem Nebenweg 120 abgetastet und über die Leitung 122 dem Schaltkreis 100 zugeführt. In der Praxis ist der Inverter 10 ein 300-A-Inverter mit einem Sperr- bzw. Abschaltpunkt bei etwa 150 - 175 A. Oberhalb dieses Sperrpunkts sind die schaltbaren Gleichrichter S5 und S6 gesperrt, so daß die Wicklungen 200 und 202 (S5, S6) unwirksam sind. Unterhalb des Sperrpunkts sind dagegen die Windungen 200 und 202 betriebswirksam, wie dies vorstehend im einzelnen erläutert ist.

## Patentansprüche

1. Hochfrequenz-Stromquelle zur Gleichstromversorgung einer Schweißstation (W) über eine Drossel (80), mit einem Kern-Transformator als Umformer (20) mit Primär- und Sekundärwicklungen, wobei die beiden in Reihe liegenden Wicklungsabschnitte (42, 44) der Sekundärwicklung (40) mit ihrem Knotenpunkt (50) an das eine Element (Werkstück oder Elektrode) der Schweißstation (W) und die beiden Ausgänge (52, 54) der Wicklungsabschnitte (42, 44) über Strom-Einwegevorrichtungen (60, 62) zusammengeschaltet über die Drossel (80) an das andere Element (Elektrode oder Werkstück) der Schweißstation (W) angeschlossen bzw. anschließbar ist bzw. sind, mit einem an die Primärwicklung (22, 24) des Umformers (20) angeschlossenen Stromimpulserzeuger (100) zur Induzierung eines Stromes mit Impulsen wechselnder Richtung in den Sekundärwicklungen, **dadurch gekennzeichnet,** daß den beiden Wicklungsabschnitten (42, 44) der Sekundärwicklung (40) jeweils eine in Reihe mit ihnen in einem Schalt- bzw. Nebenkreis liegende Hilfswicklung als Zusatz-Stromverstärkungswicklung (200, 202) zugeordnet ist, wobei im Schalt- bzw. Nebenkreis angeordnete Strom-Einwegevorrichtungen (210, 212) jeweils mit der zugeordneten Strom-Einwegevorrichtung (60 bzw. 62) gleichgepolt sind, und wobei in den Schalt-bzw. Nebenkreisen der Zusatz-Stromverstärkungswicklungen (200, 2029 eine Strombegrenzungsvorrichtung (204, 206) vorgesehen ist.

2. Hochfrequenz-Stromquelle nach Anspruch 1, **dadurch gekennzeichnet,** daß die Strombegrenzungselemente (204, 206) in den beiden Schalt- bzw. Nebenkreisen aus Induktoren bestehen.

3. Hochfrequenz-Stromquelle nach Anspruch 1 oder 2, **dadurch gekennzeichnet,** daß die Strom-Einwegevorrichtungen (210, 212) in den Schalt- bzw. Nebenkreisen zwischen einem leitenden und einem nicht-leitenden Zustand selektiv schaltbar sind.

4. Hochfrequenz-Stromquelle nach einem der Ansprüche 1 bis 3, **dadurch gekennzeichnet,** daß eine Vorrichtung (120) zur Abtastung des Stromflusses durch die Schweißstation (W) vorgesehen ist, die die Strom-Einwegevorrichtung (210, 212) der beiden Schalt- bzw. Nebenkreise nicht-leitend hält, wenn der abgetastete Strom oberhalb eines vorbestimmten Stromwertes liegt.

5. Hochfrequenz-Stromquelle nach einem der Ansprüche 1 bis 4, **dadurch gekennzeichnet,** daß die Vorrichtung (100) zur wechselweisen Beaufschlagung der Primärwicklung(en) (22, 24) jeweils eine Schaltvorrichtung (S1, S2 bzw. S3, S4) zur Magnetisierung und zur Remagnetisierung des Kerns (C) sowie eine Triggerschaltung (100) zur wechselweisen Betätigung der Sätze der Schaltvorrichtungen aufweist.

6. Hochfrequenz-Stromquelle nach einem der Ansprüche 1 bis 5, **dadurch gekennzeichnet,** daß die Vorrichtung (100) zur Beaufschlagung der Primärwicklung (22, 24) mit den Stromimpulsen mit einer Frequenz zwischen 3 und 35 KHz arbeitet.

7. Hochfrequenz-Stromquelle nach einem der Ansprüche 1 bis 6, **dadurch gekennzeichnet,** daß die Primärwicklung in zwei Wicklungsabschnitte (22, 24) geteilt ist, und daß zur Magnetisierung und Remagnetisierung des Kerns (C) in wechselnder Folge eine Vorrichtung (100) zur wechselweisen Impulsbeaufschlagung der beiden Wicklungsabschnitte (22, 24) vorgesehen ist.

8. Hochfrequenz-Stromquelle nach einem der Ansprüche 5 bis 7, **dadurch gekennzeichnet,** daß die Schaltvorrichtungen jeweils einen Schaltersatz (S1, S2 bzw. S3, S4) mit zwei gleichzeitig betätigten Schaltern aufweisen.

9. Verfahren zur Zuführung von Gleichstrom über eine Drossel zu einer ein Elektrodenelement (70) und einem Werkstückelement (72) aufweisenden Schweißstation (W), **gekennzeichnet durch** folgende Merkmale:
(a) Verwendung eines Ausgangstransformators (20) mit Kern (C), mit Primärwicklungen (22, 24) und in Reihe zueinander liegenden Sekundär-Wicklungsabschnitten (42, 44), deren Knotenpunkt (50) und deren Wicklungsenden (52, 54) zwei Ausgänge bilden;
(b) Verbindung des gemeinsamen Knotenpunkts (50) mit dem einen Element (70 oder 72) der Schweißstation (W);
(c) Verbindung der beiden anderen Ausgänge (52, 54) der Sekundär-Wicklungsabschnitte (42, 44) mit dem anderen Element (72 oder 70) der Schweißstation (W);
(d) Beaufschlagung der Primärwicklung (22, 24) mit wechselnden Stromimpulsen zur Induzierung eines Stromflusses durch die Sekundärwicklungen in Form von Impulsen entgegengesetzter Richtungen;
(e) Anordnung von Strom-Einwegevorrichtungen (60, 62) zwischen den Ausgängen (52, 54) der Sekundär-Wicklungsabschnitte (42, 44) und dem betreffenden Element der Schweißstation (W), wodurch die Gleichstromimpulse über eine Drossel (80) der Schweißstation zugeführt werden;
(f) Anordnung jeweils eines zusätzlichen Wicklungsabschnittes (200, 202) zu den beiden Wicklungsabschnitten (42, 44) der Sekundärwicklung (40) bei gleichzeitiger Begrenzung des Stromflusses nach Größe und Richtung durch die zusätzlichen Wicklungsabschnitte (200, 202).

## Claims

1. High-frequency power source for DC supply of a welding station (W) via an inductor (80), having a core transformer as a converter (20) with primary and secondary windings, the two series-connected winding sections (42, 44) of the secondary winding (40) being connected or connectable by means of their node point (50) to one element (workpiece or electrode) of the welding station (W) and the two outputs (52, 54) of the winding sections (42, 44) being connected via current rectification devices (60, 62) to the other element (electrode or workpiece) of the welding station (W), interconnected via the inductor (80), having a current-pulse generator (100), which is connected to the primary winding (22, 24) of the converter (20), for inducing a current with pulses of alternating direction in the secondary windings, characterized in that the two winding sections (42, 44) of the secondary winding (40) are in each case allocated an auxiliary winding, which is connected in series with them in a circuit or auxiliary circuit, as an additional current amplification winding (200, 202), current rectification devices (210, 212) which are arranged in the circuit or auxiliary circuit in each case having the same polarity as the associated current rectification device (60 or 62 respectively), and a current limiting device (204, 206) being provided in the circuits and auxiliary circuits of the additional current amplification windings (200, 202).

2. High-frequency power source according to Claim 1, characterized in that the current limiting elements (204, 206) in the two circuits and auxiliary circuits are composed of inductors.

3. High-frequency power source according to Claim 1 or 2, characterized in that the current rectification devices (210, 212) in the circuits and auxiliary circuits can be switched selectively between a conductive state and a non-conductive state.

4. High-frequency power source according to one of Claims 1 to 3, characterized in that a device (120) is provided for sampling the current flow through the welding station (W), which holds the current rectification device (210, 212) of the two circuits and auxiliary circuits such that they do not conduct when the sampled current is above a predetermined current value.

5. High-frequency power source according to one of Claims 1 to 4, characterized in that the device (100) for alternately acting on the primary winding or windings (22, 24) in each case has one switching device (S1, S2 and S3, S4 respectively) for magnetizing and for remagnetizing the core (C), as well as a trigger circuit (100) for alternate operation of the sets of switching devices.

6. High-frequency power source according to one of Claims 1 to 5, characterized in that the device (100) for applying the current pulses to the primary winding (22, 24) operates at a frequency between 3 and 35 kHz.

7. High-frequency power source according to one of Claims 1 to 6, characterized in that the primary winding is divided into two winding sections (22, 24), and in that a device (100) for alternately applying pulses to the two winding sections (22, 24) is provided for magnetizing and remagnetizing the core (C) in an alternating sequence.

8. High-frequency power source according to one of Claims 5 to 7, characterized in that the switching devices have in each case one switch set (S1, S2 and S3, S4 respectively) with two identically operated switches.

9. Method for supplying DC via an inductor to a welding station (W) which has an electrode element (70) and a workpiece element (72), characterized by the following features:
(a) Use of an output transformer (20) with a core (C), having primary windings (22, 24) and secondary winding sections (42, 44) which are connected in series with one another and whose node point (50) and winding ends (52, 54) form two outputs;
(b) Connection of the common node point (50) to one element (70 or 72) of the welding station (W);
(c) Connection of the two other outputs (52, 54) of the secondary winding sections (42, 44) to the other element (72 or 70) of the welding station (W);
(d) Application of alternating current pulses to the primary winding (22, 24) in order to induce a current flow through the secondary windings in the form of pulses in opposite directions;
(e) Arrangement of current rectification devices (60, 62) between the outputs (52, 54) of the secondary winding sections (42, 44) and the relevant element of the welding station (W), as a result of which the DC pulses are supplied to the welding station via an inductor (80);
(f) Arrangement of in each case one additional winding section (200, 202) to the two winding sections (42, 44) of the secondary winding (40) with simultaneous limiting of the magnitude and direction of the current flow through the additional winding sections (200, 202).

## Revendications

1. Source de courant à haute fréquence pour l'alimentation en courant continu d'un poste de soudage (W) par l'intermédiaire d'une bobine d'arrêt (80), comportant un transformateur à noyau, en tant que convertisseur (20) comportant des bobinages primaires et secondaires, les deux sections de bobinage (42, 44) du bobinage secondaire (40) montées en série étant raccordées ou pouvant être raccordées par leur point nodal (50) à l'un des éléments (pièce ou électrode) du poste de soudage (W) et les deux sorties (52, 54) des sections de bobinage (42, 44) reliées l'une à l'autre par des dispositifs électriques unidirectionnels (60, 62) étant raccordées ou pouvant être raccordées, par l'intermédiaire de la bobinage d'arrêt (80), à l'autre élément (pièce ou électrode) du poste de soudage (W), comportant un générateur d'impulsions de courant (100), raccordé au bobinage primaire (22, 24) du convertisseur (20) pour induire un courant avec des impulsions de courant alternatif dans les bobinages secondaires, caractérisée en ce qu'aux deux sections de bobinage (42, 44) du bobinage secondaire (40) correspondent chaque fois un bobinage auxiliaire, monté en série par rapport auxdites sections, dans un circuit de commutation ou circuit auxiliaire, en tant que bobinage supplémentaire d'amplification du courant (200, 202), des dispositifs de courant unidirectionnels (210, 212), montés sur le circuit de commutation ou le circuit auxiliaire, présentant chacun la même polarité que le dispositif de courant unidirectionnel (60 ou 62) correspondant, et un dispositif de limitation du courant (204, 206) étant prévu dans les circuits de commutation ou auxiliaire (200, 202).

2. Source de courant à haute fréquence selon la revendication 1, caractérisée en ce que les éléments de limitation du courant (204, 206), montés dans les deux circuits de commutation ou auxiliaires, sont constitués d'inducteurs.

3. Source de courant à haute fréquence selon l'une des revendications 1 ou 2, caractérisée en ce que les dispositifs de courant unidirectionnels (210, 212) montés dans les circuits de commutation ou auxiliaires, peuvent être commutés de manière sélective entre une position conductrice et une position non conductrice.

4. Source de courant à haute fréquence selon l'une des revendications 1 à 3, caractérisée en ce qu'un dispositif (120) maintenant à l'état non conducteur le dispositif de courant unidirectionnel (210, 212) des deux circuits de commutation ou auxiliaires, lorsque le courant détecté est supérieur à une valeur de courant prédéfinie, est prévu pour détecter le flux de courant par le poste de soudage (W).

5. Source de courant à haute fréquence selon l'une des revendications 1 à 4, caractérisée en ce que le dispositif (100) prévu pour le fonctionnement alternatif du (des) bobinage(s) primaire(s) (22, 24) présente chaque fois un dispositif de commutation (S1, S2 ou S3, S4) pour aimanter et ré-aimanter le noyau (C), ainsi qu'un trigger (100), pour actionner alternativement les jeux de dispositifs de commutation.

6. Source de courant à haute fréquence selon l'une des revendications 1 à 5, caractérisée en ce que le dispositif (100) destiné à l'acheminement des impulsions de courant vers les bobinages primaires (22, 24) travaille selon une fréquence comprise entre 3 et 35 kHz.

7. Source de courant à haute fréquence selon l'une des revendications 1 à 6, caractérisée en ce que le bobinage primaire est divisé en deux sections de bobinage (22, 24), et en ce que pour aimanter et ré-aimanter le noyau (C) alternativement, un dispositif (100) est prévu pour acheminer de manière alternative les impulsions vers les deux sections de bobinage (22, 24).

8. Source de courant à haute fréquence selon l'une des revendications 5 à 7, caractérisée en ce que les dispositifs de commutation présentent chacun un jeu de commutateurs (S1, S2, ou S3, S4) comportant deux commutateurs actionnés simultanément.

9. Procédé pour l'acheminement de courant par l'intermédiaire d'une bobine d'arrêt vers un poste de soudage (W) présentant un élément formant électrode (70) et un élément formant pièce (72), caractérisé par :
(a) l'utilisation d'un transformateur de sortie (20) comportant un noyau (C), des bobinages primaires (22, 24) et des sections de bobinage secondaires (42, 44) montées en série l'une par rapport à l'autre, dont le point nodal (50) d'une part et dont les extrémités de bobinage (52, 54) d'autre part constituent deux sorties ;
(b) la liaison du point nodal (50) commun avec l'un des éléments (70 ou 72) du poste de soudage (W) ;
(c) la liaison des deux autres sorties (52, 54) des sections de bobinage secondaires (42, 44) avec l'autre élément (72 ou 70) du poste de soudage (W) ;
(d) l'alimentation du bobinage primaire (22, 24) avec des impulsions de courant alternatif, pour induire un flux de courant par les bobinages secondaires sous la forme d'impulsions de directions opposées ;
(e) le montage de dispositifs de courant unidirectionnels (60, 62) entre les sorties (52, 54) des sections de bobinage secondaire (42, 44) et l'élément concerné du poste de soudage (W), les impulsions de courant continu étant acheminées par une bobine d'arrêt (80) vers le poste de soudage ;
(f) le montage d'une section de bobinage supplémentaire (200, 202) par rapport à chacune des deux sections de bobinage (42, 44) du bobinage secondaire (40), pour une limitation simultanée du flux de courant, en fonction du débit et du sens de circulation par les sections de bobinage supplémentaires (200, 202).
